# EUROPEAN PATENT SPECIFICATION

(11) **EP 3 973 177 B1**
(45) Date of publication and mention of the grant of the patent: **06.09.2023**
(21) Application number: 20729159.2
(22) Date of filing: 21.05.2020
(51) Int. Cl.: F03B 13/00, G01F 1/10, G01F 1/115, H02K 7/18, G01F 15/00

(54) **FLUID MONITORING APPARATUS**
FLÜSSIGKEITSÜBERWACHUNGSVORRICHTUNG
APPAREIL DE SURVEILLANCE DE FLUIDE

(30) Priority: 23.05.2019 GB 201907277
(43) Date of publication of application: 30.03.2022
(73) Proprietor: Electro Mechanical Developments Limited, Derbyshire DE7 8AB (GB)
(72) Inventor: HASWELL, Geoffrey, Derbyshire S43 4PN (GB); BISHTON, Stephen, Poole Dorset BH15 4JX (GB); JONES, Peter John, Dorset BH19 1PL (GB)
(74) Representative: McGeough, Gemma Ann
(86) International application number: PCT/GB2020/051238
(87) International publication number: WO 2020/234596

(56) References cited:
- EP-A1- 3 048 428
- CN-A- 102 829 824
- CN-A- 105 446 240
- CN-A- 105 627 108
- CN-A- 108 225 451
- CN-A- 109 099 321
- CN-B- 105 332 848
- CN-U- 202 325 703
- CN-U- 206 056 699
- CN-U- 206 430 779
- DE-U1-202004 018 523
- US-A1- 2008 022 920

## Description

### FIELD

The present teachings relate to a fluid monitoring apparatus, more particularly, but not exclusively, a fluid monitoring apparatus for use in monitoring the state of a fluid flow network, and a method of installing the fluid monitoring apparatus in a pipe arrangement. The teachings also relate to a system for monitoring fluid flow through a pipe and a method for doing the same.

### BACKGROUND

Fluid flow networks, such as water distribution networks, often cover wide areas with many miles of piping. For example, water companies in the UK own over 300,000 km of mains water pipes. Much of this infrastructure is ageing with many pipes being over 100 years old. This results in an estimated 3 billion litres of water being lost every day through leaking pipes in the UK. This contributes to water scarcity, extra costs for the water companies and higher bills for consumers. Similar problems are faced in water distribution grids around the world.

In order to solve this problem, many water companies have retrofitted fluid monitoring apparatus, which monitor water pressure to give an indication of possible leaks in the water network. The challenge in deploying such apparatus is that most water pipes are inaccessible (underground), there is no electrical supply to power the apparatus and no wired data connection to send measurements to the network operator. In addition, due to vast length of pipes in water networks, a large number of such apparatus are required to accurately detect leaks.

Typically, such apparatus overcome some of these challenges by including a battery and a wireless RF transmitter to send measured data. Due to the inaccessible nature of the pipes and the large number of apparatus, the batteries need to last several years to prevent high ongoing operational expenses. Such high capacity, long-life batteries are often expensive.

In such apparatus, RF transmission consumes the majority of the battery charge. Therefore, low data refresh rates are required to facilitate a long battery life. However, this increases the potential time between a leak occurring and the monitoring apparatus sending data indicative of the leak to the network operator, which may result in a greater loss of water from the network.

In addition, despite the attempts to extend battery life, a visit to each site is periodically required to replace the batteries when exhausted, meaning ongoing operational costs remain considerable.

EP3048428A1 discloses a fluid meter comprising a first device and a second device for measuring a quantity of fluid flowing in a duct. CN105332848B discloses a water supply network online monitoring instrument self-generating device. CN109099321A discloses an intelligent pipeline monitoring device using pipe motion fluid self power generation.

The present teachings seek to overcome or at least mitigate one or more problems associated with the prior art.

### SUMMARY

According to a first aspect of the present invention, a fluid monitoring apparatus is provided for deployment within a pipe arrangement having a primary pipe configured to permit fluid flow therethrough, the fluid monitoring apparatus comprising:
a measurement device configured to measure data indicative of a fluid property; and
an energy harvesting system comprising a turbine configured to be rotated by a flow of fluid through the pipe arrangement, and a generator coupled to the turbine and configured to generate electrical energy;
wherein the fluid monitoring apparatus is configured to use the electrical energy to power the measurement device;
wherein the turbine is configured to be deployed within the primary pipe of the pipe arrangement and comprises an axis of rotation configured to be arranged parallel to a longitudinal axis of the primary pipe of the pipe arrangement; and
wherein the turbine comprises turbine blades which define a turbine diameter, wherein the turbine blades are configured to transition between a collapsed state and an expanded state, and wherein the turbine diameter is smaller in the collapsed state than in the expanded state.

Advantageously, having an energy harvesting system that is capable of generating power for the measurement of data indicative of a fluid property may facilitate a shorter time between samples than would be possible in a battery operated system. Such a system may operate for long periods of time without requiring maintenance (e.g. to replace batteries) which makes it suitable for deployment in locations with poor accessibility, and may reduce the cost of maintaining an estate of such fluid monitoring apparatus due to the reduced maintenance even if the apparatus are at relatively accessible locations.

Aligning the axis of rotation of the turbine with a longitudinal axis of the pipe arrangement may increase the rate of rotation of the turbine and thus increase the amount of electrical energy generated.

The turbine diameter is smaller in the collapsed state than in the expanded case, such that the turbine can be transferred or passed through a secondary pipe of the pipe arrangement, of narrower diameter than the turbine diameter in the expanded state, when the turbine is in the collapsed state.

Advantageously, this allows the apparatus to be deployed via a narrower pipe than the pipe in which it is configured to operate in, without having to reduce the operable size of the turbine, which would decrease the efficiency once deployed. Narrower pipes feeding into wider pipes are common across fluid flow networks (e.g. fire hydrants in water networks are typically narrower than the main flow pipe). This allows the apparatus to be deployed via existing infrastructure, further reducing cost.

In exemplary embodiments, the turbine diameter in the expanded state is in the range of 100mm to 150mm and the turbine diameter in the collapsed state is in the range of 60mm to 100mm.

Advantageously, these sizes correspond to pipe dimensions common in fluid distribution networks (e.g. fire hydrants are typically 60mm to 100mm, while mains water flow pipes are typically 100mm to 150mm). This allows the fluid monitoring apparatus to be deployed in existing pipe infrastructure.

Optionally, the turbine diameter in the expanded state is in the range of 100mm to 150mm and the turbine diameter in the collapsed state is 19mm or less.

Advantageously, these sizes correspond to pipe dimensions common in fluid distribution networks (e.g. the core size of standard ½" BSP tappings are 19mm, while mains water flow pipes are typically 100mm to 150mm). This allows the fluid monitoring apparatus to be deployed in existing pipe infrastructure.

In exemplary embodiments, the primary pipe comprises a primary pipe internal diameter, and wherein the turbine diameter in the expanded state is substantially equal to the primary pipe diameter.

By sizing the turbine diameter in the expanded state to be substantially equal to the primary pipe diameter, the amount of energy harvested from the fluid flow through the primary pipe is maximised.

In exemplary embodiments, the turbine blades comprise a resilient material.

Advantageously, using a resilient material supports deployment of the apparatus through a relatively narrow pipe, since the resilient blades can be deformed radially inwards to transition to the collapsed state whilst being deployed, before resiliently expanding in the radial direction to transition to the expanded state once located in a larger diameter pipe.

In exemplary embodiments, the turbine blades comprise one of thermoplastic polyurethane (TPU), semi-plastic polyurethane or thermoplastic elastomer.

Advantageously, such materials are flexible and resilient which allows the turbine blades to transition between the collapsed and expanded states. Additionally, such materials are wear resistant, which ensures that the apparatus can operate efficiently over a long period of time, without requiring the apparatus to be accessed for maintenance.

Optionally, the turbine comprises a main body and wherein the turbine blades are resiliently loaded to the main body.

In this way, the turbine blades are configured to transition from the expanded to the collapsed state via rotation of the resiliently loaded connections to the main body.

In exemplary embodiments, the fluid property is one of pressure, turbidity or flow rate of fluid through the pipe arrangement.

Advantageously, such fluid properties may be useful in determining the state of a fluid flow network, such as a water distribution network.

In exemplary embodiments, wherein the measurement device is further configured to measure data indicative of a plurality of fluid properties.

Advantageously, measuring data indicative of a plurality of fluid properties gives a better understanding about the state of the fluid in the pipe arrangement. In addition, measuring data indicative of a plurality of fluid properties with a single device is an efficient use of components.

According to a second aspect of the present invention, a fluid monitoring apparatus is provided for deployment within a pipe arrangement, comprising:
a measurement device configured to measure data indicative of flow rate in the pipe arrangement; and
a turbine configured to be rotated by a flow of fluid through the pipe arrangement,
wherein data indicative of flow rate in the pipe arrangement comprises rate of rotation of the turbine.

In this way, an efficient use of components is achieved, since the turbine may be used both in the measurement device and in an energy harvesting system to drive a generator. In exemplary embodiments, the measurement device comprises a motor configured to drive the turbine, wherein the measurement device is configured to increase a power applied to the motor, and wherein the measurement device is configured to determine the flow rate of fluid via detecting a reduced power requirement for a given rotational speed of the turbine.

In this way, when the rate of rotation of the turbine corresponds to the flow rate of the water, the power required to drive the turbine at this rate is reduced. This reduced power requirement and rate of rotation can be used to infer a flow rate of fluid in the pipe.

In exemplary embodiments, the motor is a brushless DC motor.

Advantageously, this type of motor is known to offer a wide range of speed control.

In exemplary embodiments, the fluid monitoring apparatus further comprises a plurality of measurement devices configured to detect a plurality of fluid properties, wherein the plurality of fluid properties comprises at least two of pressure, turbidity or flow rate of fluid in the pipe arrangement.

Advantageously, measuring multiple fluid properties provides more detailed information regarding the state of the fluid flow network.

In exemplary embodiments, the fluid monitoring apparatus further comprises a memory for storing data recorded by the measurement device.

In this way, data indicative of a fluid property can be saved either for long-term storage or for short-term prior to transferring the data elsewhere.

In exemplary embodiments, the fluid monitoring apparatus further comprises a transmitter for sending data to a remote location.

Advantageously, such an apparatus can autonomously provide data indicative of a fluid property, which can be used to determine the state of a fluid flow network such as a water distribution network.

In exemplary embodiments, the fluid monitoring apparatus is configured to use the electrical energy to power the transmitter.

Advantageously, powering the transmitter via the power generated by the energy harvesting system facilitates a shorter time between samples than would be possible in a battery operated system. Such a system may operate for long periods of time without requiring maintenance (e.g. to replace batteries) which makes it suitable for deployment in locations with poor accessibility.

In exemplary embodiments, the transmitter comprises a radio frequency transmitter configured to transmit data via a low power transmission protocol such as GPRS, LoRa, NB-IoT, 5G, Sig Fox or NWave.

Advantageously, RF transmission is suitable for transmission of information over long distances, which means multiple such apparatuses can be deployed over a wide fluid flow network, such as a water distribution network. Furthermore, use of existing low power protocols such as LoRa, NB-IoT, 5G, Sig Fox or NWave allows more data readings to be transmitted for a given amount of power generated by the energy harvesting system. Having more data provides the fluid flow network operator with a better understanding of the state of the network.

In exemplary embodiments, the fluid monitoring apparatus further comprises a mounting arrangement configured to position the energy harvesting system within the pipe arrangement

In this way, the mounting arrangement can be used to ensure that the turbine is oriented relative to the direction of fluid flow for optimal power generation.

In exemplary embodiments, the mounting arrangement is configured to permit fluid flow through the pipe arrangement.

In this way, the apparatus does not prevent or obstruct fluid from flowing as required through the pipe arrangement.

In exemplary embodiments, the turbine comprises an axis of rotation, and the mounting arrangement extends substantially perpendicular to the axis.

In this way, the mounting arrangement can be attached to a secondary pipe arranged substantially perpendicular to a primary pipe containing the turbine. This pipe arrangement is common in fluid flow networks (e.g. vertical fire hydrants extending from a horizontal mains water pipe). This allows the fluid monitoring apparatus to be deployed in existing pipe infrastructure.

In exemplary embodiments, the mounting arrangement comprises a width, wherein the width extends in a direction defined by the axis. Optionally, the width is less than the turbine diameter in the expanded state.

In this way, the mounting arrangement can be attached to a secondary pipe of relatively narrow diameter arranged substantially perpendicular to a primary pipe of relatively larger diameter. Such a pipe configuration is common in fluid flow networks (e.g. fire hydrants are often narrower than the mains water flow pipe). This allows the fluid monitoring apparatus to be deployed in existing pipe infrastructure.

In exemplary embodiments, the turbine diameter in the expanded state is in the range of 100mm to 150mm and the width of the mounting arrangement is in the range of 60mm to 100mm.

Advantageously, these sizes correspond to pipe dimensions common in fluid distribution networks (e.g. fire hydrants are typically 60mm to 100mm, while main water flow pipes are typically 100mm to 150mm). This allows the fluid monitoring apparatus to be deployed in existing pipe infrastructure.

In exemplary embodiments, the turbine diameter in the expanded state is in the range of 100mm to 150mm and the width of the mounting arrangement is 19mm or less.

Advantageously, these sizes correspond to pipe dimensions common in fluid distribution networks (e.g. the core size of standard ½" BSP tappings are 19mm, while mains water flow pipes are typically 100mm to 150mm). This allows the fluid monitoring apparatus to be deployed in existing pipe infrastructure.

In exemplary embodiments, the mounting arrangement comprises a bearing configured to support the turbine.

In this way, friction is reduced, allowing the turbine to rotate freely within the mounting.

In exemplary embodiments, the bearing comprises a ceramic ball bearing.

Advantageously, ceramic ball bearings are highly durable and resistant to corrosive effects of fluids. This makes such an arrangement suitable for deployment over a long period of time in a fluid flow pipe with poor accessibility.

In exemplary embodiments, the turbine comprises a propeller-type turbine.

Advantageously, this type of turbine is efficient for generating power from a unidirectional fluid flow, such as a flow through a pipe.

Optionally, the turbine comprises a ball-type turbine or another turbine type with a horizontal or vertical axis.

Advantageously, this type of turbine is efficient for generating power from a multidirectional fluid flow, such as a highly turbulent fluid flow.

In exemplary embodiments, the energy harvesting system comprises a gearbox coupled to the turbine and the generator.

In this way, the angular velocity of the turbine can be stepped up or down via the gearbox to provide an optimal angular velocity for generation of power in the generator.

Optionally, the motor is configured to also act as the generator.

In this way, an efficient use of components is achieved since a single device can be used as both a motor and a generator.

In exemplary embodiments, the generator is configured to generate three phase AC electricity.

Advantageously, a three-phase circuit may be cheaper than an equivalent single-phase circuit, because it uses less conductor material to transmit a given amount of electrical power.

In exemplary embodiments, the energy harvesting system further comprises an AC to DC converter configured to convert AC electricity to DC electricity.

Advantageously, converting the electricity to DC allows the electrical energy to be stored in a DC electrical energy storage means, such as a battery or capacitor.

In exemplary embodiments the gearbox is configured to step up such that a generator angular displacement is greater than a turbine angular displacement. Optionally, the ratio of generator angular displacement to turbine angular displacement is in the range of 2 to 1 to 10 to 1. Optionally, the ratio of generator angular displacement to turbine angular displacement is 5 to 1.

Advantageously, this arrangement converts a relatively low angular displacement of the turbine into a relatively high angular displacement of the generator shaft, for optimal power generation.

In alternative embodiments, a different step up ratio may be used to match the power characteristics of the energy harvesting system to the water flow rate and the desired energy output.

In exemplary embodiments, the gearbox is nested within the turbine.

Advantageously, this arrangement makes it easier for the turbine and the gearbox to be coupled via a coupling mechanism.

In exemplary embodiments, the gearbox is coupled to the turbine via a magnetic coupling.

In this way, the turbine and the gearbox are coupled without requiring a mechanical connection between them. This allows the gearbox and the generator to be sealed from the fluid in the pipe arrangement, whilst still co-rotating with the turbine.

In exemplary embodiments, the generator is coupled to the turbine via a magnetic coupling.

In exemplary embodiments, the magnetic coupling comprises a magnetic clutch. The magnetic clutch may be configured to decouple the gearbox/generator and the turbine under high flow conditions.

Under very high flow conditions, such as those encountered when a fire hydrant is in use, or when a major pipe burst occurs, the flow will increase to the order of 35 metres per second. At this rate, the turbine rotations will be very high, and the corresponding energy harvested could be sufficient to damage the DC motor and the electronic systems to which it is attached. Under such high rotational loads, the magnetic clutch will disengage ('slip') to decouple the turbine and the gearbox, hence decouple the generator and the turbine. Advantageously, this protects the motor and electronics from damage caused by excessively high electrical voltage and current.

In exemplary embodiments, the turbine comprises a plurality of circumferentially arranged magnets, and the gearbox comprises a corresponding plurality of circumferentially arranged magnets.

Advantageously, this arrangement provides a suitable magnetic coupling in a simple arrangement.

In exemplary embodiments, the magnetic clutch is provided by altering the strength and/or polarity of the plurality of circumferentially arranged magnets of the gearbox when in use, to alter the torque transmission properties of the magnetic coupling.

Advantageously, this provides a mechanism for the engagement and disengagement (or 'slipping') of the magnetic clutch.

In exemplary embodiments, the fluid monitoring apparatus further comprises an electrical energy storage device coupled to the energy harvesting system. In exemplary embodiments, the electrical energy storage device is configured to store energy generated by the energy harvesting system. In exemplary embodiments, the electrical energy storage means is used to power the measurement device and/or the transmission means.

Advantageously, storing the generated power in an electrical energy storage device allows sensing and/or transmission actions can be carried out at any time, even if fluid is not flowing through the main pipe at that time. In addition, use of an electrical energy storage means allows electrical charge to be built up over a relatively long period of low-power generation when the turbine is rotating, to be used in a relatively short period of higher-power sensing and/or transmission actions.

In exemplary embodiments, the electrical energy storage means comprises a battery or a capacitor.

Advantageously, a battery is able to store electrical energy over a longer period of time than other electrical energy storage means such as capacitors. In this way, fluid property measurements can be recorded and transmitted for a longer period of time after fluid stops flowing in the pipe arrangement.

In exemplary embodiments, the fluid monitoring apparatus further comprises a housing configured to seal at least part of the energy harvesting system from the fluid in the pipe arrangement.

Advantageously, sealing the energy harvesting components isolates them from the fluid flow in the pipe, which prevents damage via short-circuiting or corrosion.

In exemplary embodiments, the housing comprises three flanged caps arranged so as to form a sealed can with two chambers. In exemplary embodiments, the first chamber contains the gearbox and the second chamber contains the generator. In exemplary embodiments, the flanged caps are joined via a bolted connection through the flanges.

Advantageously, this sealed can arrangement is easy to manufacture and assemble around the energy harvesting system components.

In alternative embodiments, the housing comprises a single piece attached to a mating face with suitable fasteners, interposed with a gasket material. In alternative embodiments, the housing comprises two flanged caps arranged so as to form a sealed can with a single chamber, interposed with a gasket material. In alternative embodiments, casings may be welded or bonded together, rather than bolted.

In exemplary embodiments, the gearbox is supported within the housing via a bearing. In this way, friction is reduced, allowing the gearbox to rotate freely within the casing.

In exemplary embodiments, the bearing comprises a ceramic ball bearing. Advantageously, ceramic ball bearings are highly durable and have a reduced requirement for lubrication over other types of bearing. This makes such an arrangement suitable for deployment over a long period of time in a location with poor accessibility.

According to a third aspect of the present invention, a system for monitoring fluid flow through a pipe is provided, comprising:
a fluid monitoring apparatus according to the first or second aspects of the invention;
a transmitter for sending data recorded by the measurement device;
a receiver for receiving data sent by the transmitter;
a data processor for determining abnormalities in the received data; and
an output for providing an alert when abnormalities are detected by the data processor.

Advantageously, this system can be used to autonomously detect problems in a fluid flow network (e.g. leaks in a water distribution network) and alert the network operator that action needs to be taken to fix the problem. By including an apparatus with energy harvesting capabilities, data can be transmitted more regularly than in a solely battery-operated system, which reduces the time between a problem occurring and the system identifying it and alerting the network operator.

According to a fourth aspect of the present invention, a method of monitoring a fluid flowing through a pipe arrangement using a system according to the third aspect of the present invention is provided, comprising:
recording measurements of the fluid flowing through the pipe using the measurement device;
transmitting the flow measurements from the transmitter to the receiver;
processing the received data via the data processor to determine abnormalities; and
alerting via the data output when abnormalities are detected.

Advantageously, this provides a method for autonomously detecting problems in a fluid flow network (e.g. leaks in a water distribution network) and alerting the network operator that action needs to be taken to fix the problem. By including an apparatus with energy harvesting capabilities, data can be transmitted more regularly than in a solely battery-operated system, which reduces the time between a problem occurring and the system identifying it and alerting the network operator.

According to a fifth aspect of the present invention, a method of installing a fluid monitoring apparatus according to the first or second aspects of the present disclosure in a pipe arrangement comprising a primary pipe and a secondary pipe arranged substantially perpendicular to the primary pipe is provided, the method comprising:
blocking a portion of the pipe arrangement such that the secondary pipe can be unsealed without loss of fluid;
inserting the fluid monitoring apparatus into the primary pipe via the secondary pipe;
orienting the turbine such that it is configured to rotate when a fluid flows along the primary pipe;
sealing the secondary pipe; and
unblocking the portion of the pipe arrangement such that flow is not inhibited within the pipe arrangement.

In this way, a fluid monitoring apparatus can be deployed via existing infrastructure (such as a fire hydrant in a water network).

### BRIEF DESCRIPTION OF THE DRAWINGS

Embodiments are now described by way of example only with reference to the accompanying drawings, in which:
Figure 1 is a schematic diagram of a fluid monitoring apparatus according to an embodiment in situ in a pipe arrangement;
Figure 2 is a side view of the fluid monitoring apparatus of Figure 1 in the direction of arrow B in situ in a pipe arrangement;
Figure 3 is a sectional view on the plane 3-3 of the fluid monitoring apparatus of Figure 2;
Figure 4 is an isometric view of the energy harvesting system of the fluid monitoring apparatus of Figure 1;
Figure 5 is an axial side view of the energy harvesting system of Figure 4; and
Figure 6 is an exploded isometric view of the energy harvesting system of Figure 4.

### DETAILED DESCRIPTION

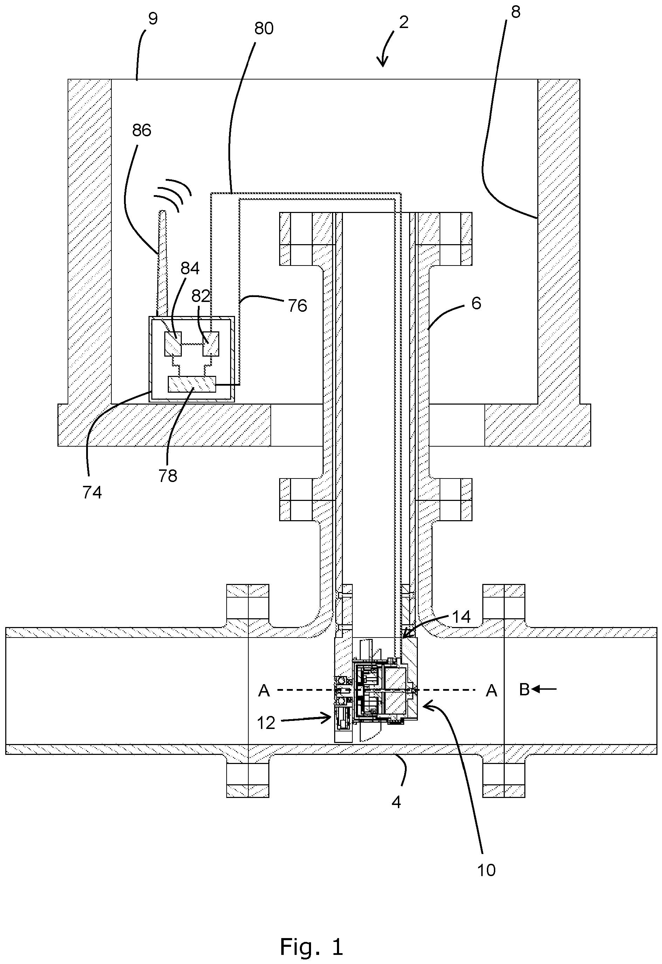

Referring to Figure 1, a fluid monitoring apparatus 10 of the teachings is shown schematically in situ in a pipe arrangement indicated generally at 2. The pipe arrangement 2 is representative of a typical potable water distribution pipe, hereinafter referred to as a primary pipe 4. A riser pipe, hereinafter referred to as a secondary pipe 6, extends from the primary pipe 4 at substantially right angles in a generally vertical direction. In this embodiment, the secondary pipe is configured as a fire hydrant typically referred to as a through bore hydrant. In the UK, the design of such through bore hydrants is governed by BS750:2012. For clarity, the fire hydrant valve and fitting normally attached at the top of the secondary pipe 6 are omitted. The secondary pipe 6 is located within an underground chamber 8 that is closed by a suitable access cover 9.

A common feature of such through bore hydrants, both in the UK and overseas is that the secondary pipe 6 has a smaller internal diameter than the primary pipe 4. For example, the primary pipe may have an internal diameter in excess of 100 mm, for example within the range of 100 mm to 150 mm whereas the secondary pipe has an internal diameter less than 100 mm, e.g. between 60 and 100 mm, typically 80 mm or 70 mm.

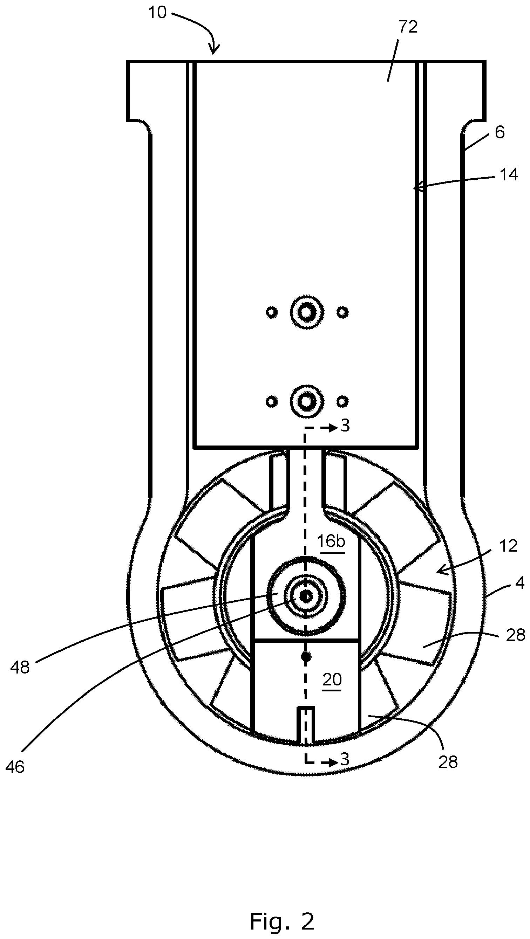

As can be seen in Figure 1, the fluid monitoring apparatus 10 is located partially within the secondary pipe 6 and partially within the primary pipe 4. The difference between the diameters of the primary and secondary pipes can be seen more clearly in Figure 2, for example.

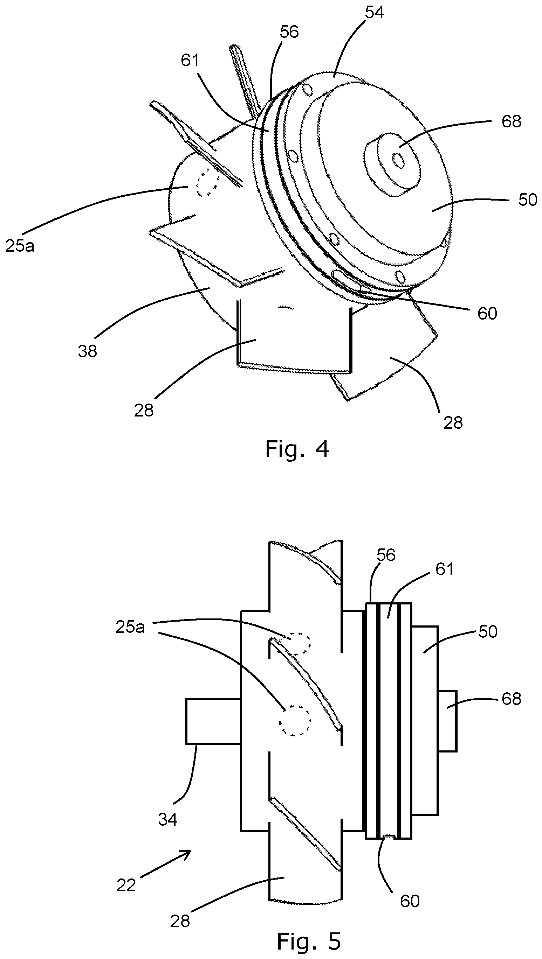

With reference to Figures 1 to 6 the construction of the fluid monitoring apparatus 10 will now be discussed in more detail. The fluid monitoring apparatus 10 generally comprises a primary portion 12 to be located and used in the primary pipe 4 and a secondary portion 14 can be located in the secondary pipe 6.

In this embodiment, the primary portion 12 comprises the majority of the functional components of the fluid monitoring apparatus 10, whereas the secondary portion 14 is used as a mounting arrangement to mount the fluid monitoring apparatus 10 within the pipe arrangement 2, and during fitting and removal assist in guiding the fluid monitoring apparatus into the correct location within the pipe arrangement. In another embodiment, this may not necessarily be the case. In particular, functional components may be located within the secondary portion 14.

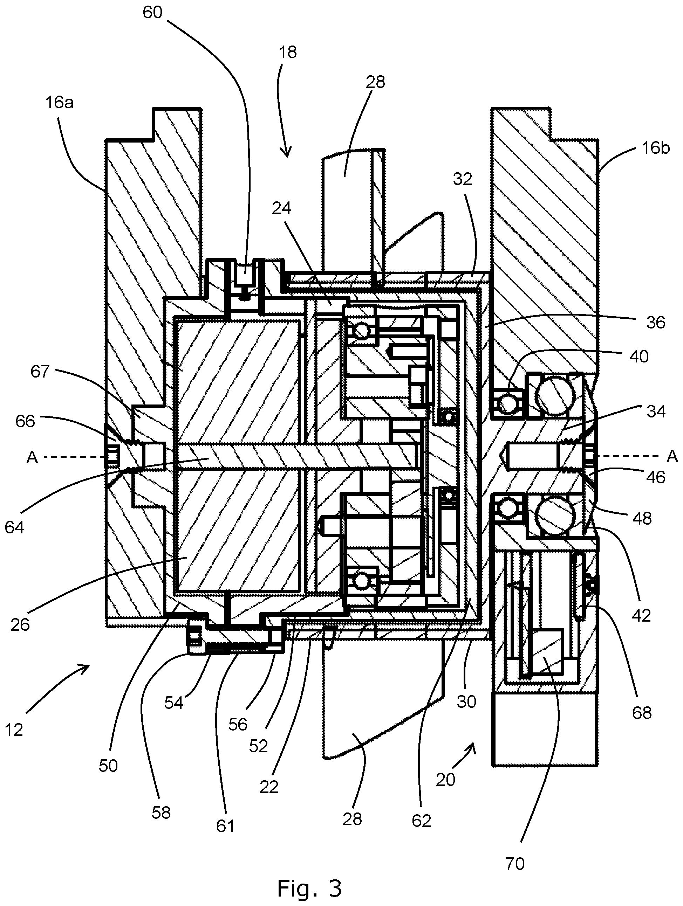

Referring to Figures 2 and 3, the primary portion 12 comprises first and second arms 16a and 16b arranged to mount the primary portion to the secondary portion 14. An energy harvesting assembly 18 is located generally in between the first and second arms 16a and 16b and is mounted thereto. A sensor assembly 20 is mounted to the bottom of the second arm 16b.

The energy harvesting assembly 18 has three main parts: a turbine 22, a gearbox 24 and a generator 26.

The turbine 22 is in this embodiment a Kaplan turbine and comprises a plurality of turbine blades 28 arranged around a turbine shaft 30. The turbine shaft 30 has a large diameter hollow portion 32 and a small diameter support portion 34. The large diameter portion 32 and small diameter portion 34 are joined by a planar disc 36.

In this embodiment, the turbine blades 38 are propeller-like, being angled with respect to an axis of rotation A-A of the turbine and the direction of flow of fluid past the blades. Thus, as fluid flows past the blades, the turbine is caused to turn about axis A-A, once any resistance to rotation is overcome. In other embodiments, the turbine could be a ball type, or another turbine type with a vertical or horizontal axis.

It will be noted from Figure 2 that the maximum diameter of the blades 28 is greater than the internal diameter of the secondary pipe 6. Therefore, in this embodiment, in order for the primary portion 12 to be fitted within the primary pipe 4 it is desirable for the blades to be collapsible in order that their diameter may be reduced for fitting through the secondary pipe 6. It is also desirable for the blades to restore back to their extended (deployed) position once they are free to do so in the larger diameter primary pipe 4.

In this embodiment, the turbine blades 28 are flexible by virtue of being formed from a resilient material. In this embodiment, the blades are formed from thermoplastic polyurethane (TPU) which as well as being flexible is also regarded as being safe for use within a potable water supply. Beneficially, TPU is wear resistant. In other embodiments, alternative flexible materials may be used such as other thermoplastic elastomers, e.g. synthetic rubbers such as ethylene propylene diene monomer (EPDM). In other embodiments, the turbine blades 28 may be fully or partially rigid but provided with a mechanical or living type hinge that enables them to deflect and then self-deploy once within the primary pipe 4. It should be further noted that in this embodiment the turbine blades 28 are unitarily formed (e.g. by moulding) with a TPU sleeve that fits over the large diameter shaft 32. This simplifies the manufacture of the turbine blades 28. In other embodiments the turbine blades may be individually secured to the shaft.

To rotatably mount the turbine 22 to the arm 16b, a suitable bearing arrangement is used. In order to minimise frictional energy losses it is preferred to use a low friction bearing arrangement such as ceramic rolling element bearings. In this embodiment two ceramic rolling element bearings are used in conjunction with a stepped bore of the second arm 16b. Specifically, a first rolling element bearing 40 has concentrically arranged inner and outer races to concentrically align the small diameter shaft 34 with the stepped bore 42. A second rolling element bearing 44 has axially arranged races and controls the axial relationship between the turbine shaft 30 and the second arm 16b. To set and maintain the relative position of the turbine shaft 30 with respect to the second arm 16b, a counter sunk screw 46 and washer are threadably mounted to the end of the small diameter portion of the shaft 34 and appropriately tightened. Consequently, the turbine 22 is able to freely rotate in an axially fixed position in a self-supporting manner. A benefit of ceramic bearings is that they are operable for extended periods whilst being immersed in water or other fluids. In other embodiments other bearing arrangements may be used, such as hydroactive plain bearings, in which the fluid pressure provides the support.

To enable the flow of water in the primary pipe 4 to efficiently generate electricity using this type of turbine 22 it is advantageous to provide the gearbox 24 to step up the speed of rotation of an input drive into the generator 26.

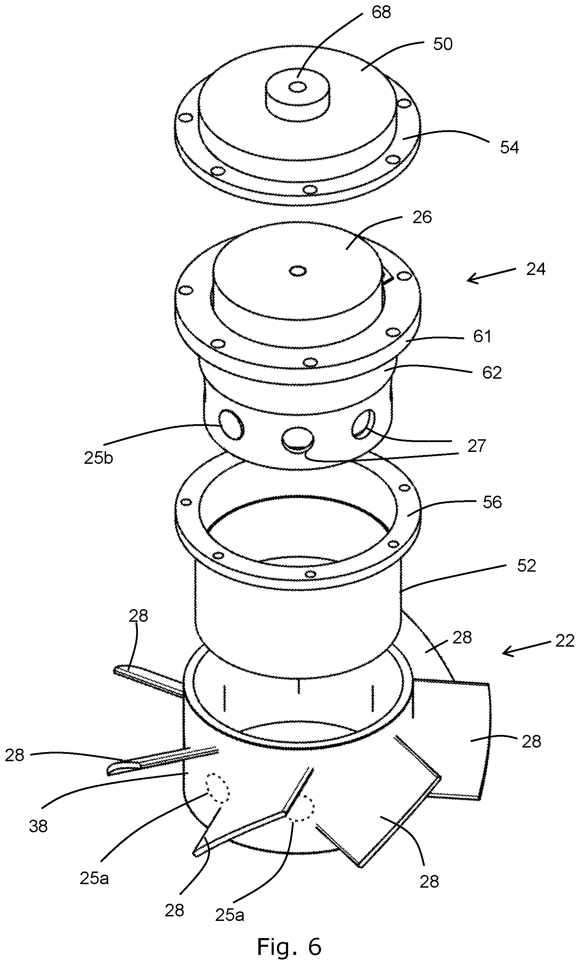

Further, in order that the axial length of the primary portion is kept to less than the maximum diameter of the secondary pipe, the generator and gear box needs to be compact. In this embodiment, as can be seen in Figures 3 and 6 in particular, this is achieved by nesting the gearbox 24 within the large diameter hollow portion 32 of the turbine shaft. In this embodiment a portion of the generator is also nested within the large diameter hollow portion 32. In addition, the gearbox 24 utilises an axially compact epicyclic gear arrangement of a known layout to achieve a step up ratio of around 1:5. In other embodiments, a different step up ratio may be used to match the power characteristics of the energy harvesting system to the water flow rate and the desired energy output.

To seal the gear box 24 and generator 26 from the fluid within the primary pipe 4, both are both enclosed within a two-piece housing comprising a rear housing 50 and a front housing 52, both of which are generally cup-shaped. The rear housing 50 and front housing 52 have radially outwardly extending flanges 54 and 56 respectively that mate together with corresponding bores that accommodate suitable fasteners 58 to clamp the rear housing 50 and front housing 52 together and thereby create a water tight seal. Other embodiments where the housing is made of one piece and attached to a mating face with suitable fasteners, interposed with a gasket material are envisaged. Further embodiments where the two casings are welded or bonded together are also envisaged.

The single opening in the overall housing 50, 52 is an electrical connection 60 within a ring 61 sandwiched between the flanges 54 and 56 to enable the electrical power generated by the generator 26 to be transmitted to the required component(s) as discussed in more detail below. This connector 60 is of course also sealed from water ingress.

It can be seen that a screw 66 mounts the rear housing 50 to the first arm 16a via a threaded bore in a mounting boss 68, thereby retaining the housing in position and ensuring a uniform and consistent clearance between the large diameter hollow turbine shaft 32 and the front housing 52 so that rotation of the turbine 22 is not impeded.

It will be appreciated that there is no physical mechanical connection between the turbine 22 and the gearbox 24. Instead, to transmit the rotational movement of the turbine 22 to the gear box 24, a magnetic drive is used. The magnetic drive is magnetic clutch-type drive, which allows the coupling between the turbine and gearbox to be disengaged/decoupled or 'slipped' under high rotational loads caused by high flow conditions (such as those encountered when a fire hydrant is in use, or when a major pipe burst occurs). This protects the generator and electronics from damage caused by excessively high electrical voltage and current.

The drive comprises a series of permanent magnets 25a arranged around the inner circumference of the large diameter portion of the turbine shaft 32 and a corresponding series of non-permanent magnets 25b to be located in pockets 27 arranged at equal angular spacings around an input flywheel 62 of the gearbox 24. Under high flow conditions, the magnetic clutch-type drive is configured to reduce the magnetic attraction and/or alter the polarity of the non-permanent magnets 25b. This reduces the magnetic attraction of the magnetic coupling between permanent magnets 25a and non-permanent magnets 25b, which allows the turbine shaft 32 and input flywheel 62 to disengage or 'slip' in relation to one another.

The front housing 52 is manufactured from suitable material such as 316 grade stainless steel, or a polymer that does not unduly interfere with the propagation of the magnetic field from the magnets on the turbine to the magnets on the flywheel 62. The rotation of the flywheel is then transmitted through the gear box to an input shaft 64 of the generator 26 with the rotation of the generator resulting in an electrical current being transmitted from the generator via the electrical connection 60.

With further reference to Figure 3, the sensor assembly 20 is provided at the lowermost extent of the second arm 16b and may be used to house a variety of sensors that provide useful information on the condition of the fluid within the primary pipe 4. For example, if the fluid is potable water in a water distribution pipe, the sensor assembly 20 may house a pressure sensor 68 and a turbidity sensor 70. The pressure sensor 68 may be utilised to infer when there is a leak on a particular section of the pipe (e.g. an unexpected drop in pressure may be indicative of a leak). The turbidity sensor may be utilised to indicate when the water in the pipe is contaminated with foreign particulate matter that may be undesirable. Other sensors may also be fitted such as temperature sensors or sensors that detect the presence of other unwanted material within the water such as Trihalomethanes, Chlorine, heavy metals and bacteria.

As well as mounting the sensors 66, 68 the sensor assembly 20 may also act as a stop so that the fluid monitoring apparatus 10 cannot be inserted too far down into the primary pipe 4 so that rotation of the turbine is inhibited.

In addition to the turbine 22 being used to generate electricity, it will be appreciated that it may also be used for measuring the flow rate of the fluid in the primary pipe 4. This may be achieved by supplying electricity to the generator 26 so that it operates in reverse as an electric motor, and adjusting the speed of the motor until a minimum power requirement is detected corresponding to parity between the flow rate of the fluid and fluid displaced by the turbine.

It will be appreciated that it is desirable for the turbine blades 28 to extend as close to the walls of the primary pipe 4 as is practicable since this maximises the energy that may be harvested and converted into electricity for a given flow rate. For example there may be a clearance of 1mm-3mm between the tips of the turbine blades 28 and the wall of the primary pipe 4. Typically the flow rate in potable water distribution pipes does not exceed 3m/s and therefore the energy available to be harvested is limited. The conversion thereof needs to be maximised in order for the fluid monitoring apparatus 10 to operate utilising the energy harvested from the fluid.

Considering the secondary portion 14, in this embodiment this comprises a tubular section 72 of a suitable diameter to be a relatively close but free running fit within the secondary pipe 6. It is important that the tubular section 72 is hollow to permit the cabling to be run from the electrical connection 60 and to the sensors 68, and so as not to unduly restrict flow to the hydrant such that if it is required by the fire service to extinguish a fire a good flow of water remains available.

Referring back to Figure 1, it can be seen that a plurality of cables extend from the fluid monitoring apparatus 10 to a separate unit 74 located within the underground chamber 8.

A first group of power cables 76 connect to an energy storage device 78, e.g. a battery, capacitor or the like, and a second group of signal cables 80 are connected to a suitable processing unit 82, e.g. a micro-processor, from the sensor(s). The processing unit 82 may include a signal processing component to convert the raw signals from the pressure sensor 68 and turbidity sensor 70 into useful data, as well as a memory to store such data, and an interface to a radio frequency transmitter 84 that is utilised to transmit the sensor data to a remote location at suitable intervals. The unit 74 may comprise an aerial 86 to facilitate this transmission. The energy storage device 78 is connected to both the processing unit 82 and RF transmitter 84 in order to supply electrical power thereto as is required.

It will be appreciated that the provision of an energy storage device 78 is desirable since the energy harvesting assembly 18 may not be operable to supply the required amount of electrical power at all times. For example, during night time the flow of water through a water distribution network may be minimal as there is little water usage and so insufficient electrical energy will be generated during these periods. However, it may be desirable to transmit data to a remote location at fixed intervals throughout the night. As such, the energy storage device 78 may be charged with excess electrical energy at certain times for the powering of the processing unit 82 and RF transmitter 84 at other times when there is a deficit.

In other embodiments, the energy storage device 78 may be omitted if it is acceptable for transmission to only occur when a flow of fluid is available, or if the pipe network is such that a suitable flow is available continuously. The transmitter may utilise one of a number of known transmission protocols to transmit data to a remote location, for example, GPRS, Wi-Fi, LoRa, Sigfox, NB-IoT and 5G or NWave. Low power protocols such as LoRa, sigfox NB-IoT, 5G or NWave are preferred.

The fluid monitoring apparatus may be deployed into the primary pipe 4 if it does not contain pressurised fluid, simply by removing any cover present on the secondary pipe 6, lowering the fluid monitoring apparatus 10 into the secondary pipe, causing the turbine blades 28 to flex, and, if required, rotating the turbine 22 so that its axis of rotation A-A is aligned with the axis of the pipe. Finally, the cover is replaced with the cables 76 and 80 routed therethrough using a suitable sealed pathway.

It is also possible to fit the fluid monitoring apparatus into a pressurised pipe using suitable injection apparatus possibly in conjunction with inflatable members to seal a portion of the pipe, or by freezing the fluid to block a portion of the pipe.

The fluid monitoring apparatus may be incorporated into a system for monitoring fluid flow through a pipe. Such a system incorporates a receiver for receiving data sent by the transmitter at a remote location, a data processor for determining abnormalities in the received data; and an output for providing an alert when abnormalities are detected by the data processor. The output may be a visual alert, for example on a screen at a central monitoring station.

It will be appreciated that numerous changes may be made within the scope of the present teachings.

In some embodiments the apparatus may also comprise an AC/DC converter, if for example the generator generates AC power, and the microprocessor etc require DC power. The apparatus may additionally comprise sensors not directly related to monitoring the condition of a fluid. For example they may comprise GPS sensors to track their location and enable them to be found again if required. They may also comprise sensors to detect tampering and movement to alert the monitoring station to potential theft or sabotage of the sensor.

In certain embodiments, sufficient electrical energy can be harvested without using a turbine that substantially fills the primary pipe. Although described in relation to water distribution pipes, the apparatus of the present teaching may also be utilised for monitoring other fluids at locations away from a ready source of electrical power. For example, the apparatus may be used in oil and gas pipelines, sewers and district heating networks.

## Claims

1. A fluid monitoring apparatus (10) for deployment within a pipe arrangement (2) having a primary pipe (4) configured to permit fluid flow therethrough, the fluid monitoring apparatus (10) comprising:
a measurement device configured to measure data indicative of a fluid property; and
an energy harvesting system (18) comprising a turbine (22) configured to be rotated by a flow of fluid through the pipe arrangement (2), and a generator (26) coupled to the turbine (22) and configured to generate electrical energy;
wherein the fluid monitoring apparatus (10) is configured to use the electrical energy to power the measurement device
wherein the turbine (22) is configured to be deployed within the primary pipe (4) of the pipe arrangement (2) and comprises an axis of rotation (A-A) configured to be arranged parallel to a longitudinal axis of the primary pipe (4) of the pipe arrangement (2); and
wherein the turbine (22) comprises turbine blades (28) which define a turbine diameter, wherein the turbine blades (28) are configured to transition between a collapsed state and an expanded state, and wherein the turbine diameter is smaller in the collapsed state than in the expanded state.

2. A fluid monitoring apparatus (10) according to claim 1, wherein the turbine diameter in the expanded state is in the range of 100mm to 150mm and the turbine diameter in the collapsed state is in the range of 60mm to 100mm.

3. A fluid monitoring apparatus (10) according to claim 1 or 2, wherein the primary pipe (4) comprises a primary pipe internal diameter, and wherein the turbine diameter in the expanded state is substantially equal to the primary pipe diameter.

4. A fluid monitoring apparatus (10) according to any of claims 1 to 3, wherein the turbine blades (28) comprise a resilient material.

5. A fluid monitoring apparatus (10) according to any of claims 1 to 3, wherein the turbine (22) comprises a main body (32) and wherein the turbine blades (28) are resiliently loaded to the main body (32).

6. A fluid monitoring apparatus (10) according to any preceding claim, wherein the fluid property is one of pressure, turbidity or flow rate of fluid through the pipe arrangement (2); optionally, wherein the measurement device comprises the turbine (22), wherein the measurement device is configured to measure data indicative of flow rate in the pipe arrangement (2), and wherein data indicative of flow rate in the pipe arrangement (2) comprises rate of rotation of the turbine (22); optionally, wherein the measurement device comprises a motor (26) configured to drive the turbine (22), wherein the measurement device is configured to increase a power applied to the motor (26), and wherein the measurement device is configured to determine the flow rate of fluid via detecting a reduced power requirement for a given rotational speed of the turbine (22).

7. A fluid monitoring apparatus (10) according to any preceding claim, further comprising a transmitter (84) for sending data recorded by the measurement device to a remote location, optionally wherein the transmitter (84) comprises a radio frequency transmitter configured to transmit data via a low power transmission protocol such as GPRS, LoRa, NB-IoT, 5G, Sig Fox or NWave; optionally, wherein the fluid monitoring apparatus (10) is configured to use the electrical energy to power the transmitter (84).

8. A fluid monitoring apparatus (10) according to any preceding claim, further comprising a mounting arrangement (14) configured to position the energy harvesting system within the pipe arrangement (2); optionally, wherein the mounting arrangement (14) is configured to permit fluid flow through the pipe arrangement (2); optionally, wherein the mounting arrangement (14) extends substantially perpendicular to the axis of rotation (A-A) of the turbine (22); optionally, wherein the mounting arrangement (14) comprises a width, wherein the width extends in a direction defined by the axis of rotation (A-A), and wherein the width is less than the turbine diameter in the expanded state; optionally, wherein the turbine diameter in the expanded state is in the range of 100mm to 150mm and the width of the mounting arrangement is in the range of 60mm to 100mm.

9. A fluid monitoring apparatus (10) according to any preceding claim, wherein the turbine (22) comprises a propeller-type turbine.

10. A fluid monitoring apparatus (10) according to any preceding claim, wherein the energy harvesting system (18) comprises a gearbox (24) coupled to the turbine (22) and the generator (26), optionally wherein the gearbox (24) is configured to step up such that a generator angular displacement is greater than a turbine angular displacement, preferably wherein the ratio of generator angular displacement to turbine angular displacement is in the range of 2 to 1 to 10 to 1, e.g. around 5 to 1; optionally, wherein the gearbox (24) is nested within the turbine (22); optionally, wherein the gearbox (24) is coupled to the turbine (22) via a magnetic coupling (25a, 25b); optionally, wherein the magnetic coupling (25a, 25b) comprises a magnetic clutch, and wherein the magnetic clutch is configured to decouple the gearbox (24) and the turbine (22) under high flow conditions; optionally, wherein the turbine (22) comprises a plurality of circumferentially arranged magnets (25a), and wherein the gearbox (24) comprises a corresponding plurality of circumferentially arranged magnets (25b).

11. A fluid monitoring apparatus (10) according to any preceding claim, further comprising an electrical energy storage device (78) coupled to the energy harvesting system (18), wherein the electrical energy storage device (78) is configured to store energy generated by the energy harvesting system (18), and wherein the electrical energy storage means (78) is used to power the measurement device and/or the transmission means.

12. A fluid monitoring apparatus (10) according to any preceding claim, further comprising a housing (50, 52) configured to seal at least part of the energy harvesting system (18) from the fluid in the pipe arrangement (2).

13. A system for monitoring fluid flow through a pipe (4), comprising:
a fluid monitoring apparatus (10) of any preceding claim when dependent on claim 7;
a receiver for receiving data sent by the transmitter (84);
a data processor for determining abnormalities in the received data; and
an output for providing an alert when abnormalities are detected by the data processor.

14. A method of monitoring a fluid flowing through a pipe arrangement (2) using a system of claim 13, comprising:
recording measurements of the fluid flowing through the pipe (4) using the measurement device;
transmitting the flow measurements from the transmitter (84) to the receiver;
processing the received data via the data processor to determine abnormalities; and
alerting via the data output when abnormalities are detected.

15. A method of installing a fluid monitoring apparatus (10) of any of claims 1 to 12 in a pipe arrangement (2) comprising a primary pipe (4) and a secondary pipe (6) arranged substantially perpendicular to the primary pipe (4), the method comprising:
blocking a portion of the pipe arrangement (2) such that the secondary pipe (6) can be unsealed without loss of fluid;
inserting the fluid monitoring apparatus (10) into the primary pipe (4) via the secondary pipe (6);
orienting the turbine (22) such that it is configured to rotate when a fluid flows along the primary pipe (4);
sealing the secondary pipe (6); and
unblocking the portion of the pipe arrangement (2) such that flow is not inhibited within the pipe arrangement (2).

## Patentansprüche

1. Flüssigkeitsüberwachungssystem (10) zum Installieren in einer Rohranordnung (2) mit einem Hauptrohr (4), das eingerichtet ist, um Flüssigkeit hindurchströmen zu lassen, wobei die Flüssigkeitsüberwachungsvorrichtung (10) umfasst:
eine Messeinrichtung, die dazu eingerichtet ist, Daten zu messen, die Aufschluss über eine Eigenschaft der Flüssigkeit geben; und
ein Energie-Harvesting-System (18) mit einer Turbine (22), die konfiguriert ist für eine Drehung durch einen Flüssigkeitsstrom durch die Rohranordnung (2), und einem Generator (26), der mit der Turbine (22) verbunden ist und für die Erzeugung elektrischer Energie konfiguriert ist;
wobei die Flüssigkeitsüberwachungseinrichtung (10) konfiguriert ist für eine Nutzung der elektrischen Energie zum Betreiben der Messeinrichtung;
wobei die Turbine (22) konfiguriert ist für die Installation in dem Hauptrohr (4) der Rohranordnung (2) und eine Drehachse (A-A) aufweist, die für eine Anordnung parallel zu einer Längsachse des Hauptrohres (4) der Rohranordnung (2) konfiguriert ist; und
wobei die Turbine (22) Turbinenschaufeln (28) hat, die einen Turbinendurchmesser definieren, wobei die Turbinenschaufeln (28) konfiguriert sind für einen Übergang zwischen einem kollabierten Zustand und einem gespreizten Zustand und wobei der Turbinendurchmesser im kollabierten Zustand kleiner ist als im gespreizten Zustand.

2. Flüssigkeitsüberwachungsvorrichtung (10) nach Anspruch 1, wobei der Turbinendurchmesser im gespreizten Zustand im Bereich von 100 mm bis 150 mm und im kollabierten Zustand im Bereich von 60 mm bis 100 mm liegt.

3. Flüssigkeitsüberwachungsvorrichtung (10) nach einem der Ansprüche 1 oder 2, wobei das Hauptrohr (4) einen Hauptrohr-Innendurchmesser aufweist und wobei der Turbinendurchmesser im gespreizten Zustand im Wesentlichen gleich dem Hauptrohrdurchmesser ist.

4. Flüssigkeitsüberwachungsvorrichtung (10) nach einem der Ansprüche 1 bis 3, wobei die Turbinenschaufeln (28) ein elastisches Material umfassen.

5. Flüssigkeitsüberwachungssystem (10) nach einem der Ansprüche 1 bis 3, wobei die Turbine einen Hauptkörper (32) hat und wobei die Turbinenschaufeln (28) elastisch am Hauptkörper (32) angebracht sind.

6. Flüssigkeitsüberwachungsvorrichtung (10) nach einem der vorangehenden Ansprüche, wobei die Flüssigkeitseigenschaft eine ist von Druck, Trübung oder Durchflussmenge der Flüssigkeit durch die Rohranordnung (2); wobei die Messvorrichtung optional die Turbine (22) umfasst, wobei die Messvorrichtung dazu eingerichtet ist, Daten zu messen, die Aufschluss geben über die Durchflussmenge in der Rohranordnung (2), und wobei Daten, die Aufschluss geben über die Durchflussmenge in der Rohranordnung (2) eine Drehgeschwindigkeit der Turbine (22) umfassen; wobei die Messvorrichtung optional einen Motor (26) umfasst, der für den Antrieb der Turbine (22) konfiguriert ist, wobei die Messvorrichtung dazu eingerichtet ist, eine an den Motor (26) angelegte Leistung zu erhöhen, und wobei die Messvorrichtung dazu eingerichtet ist, die Durchflussmenge der Flüssigkeit über die Erfassung eines geringeren Energiebedarfs bei einer bestimmten Drehzahl der Turbine (22) zu bestimmen.

7. Flüssigkeitsüberwachungsvorrichtung (10) nach einem der vorangehenden Ansprüche, ferner umfassend einen Sender (84) zum Senden von Daten, die von der Messeinrichtung aufgezeichnet wurden, an einen entfernten Ort, wobei der Sender (84) optional einen Funkfrequenzsender umfasst, der konfiguriert ist für eine Datenübertragung über ein Übertragungsprotokoll mit geringer Leistung, wie zum Beispiel GPRS, LoRa, NB-IoT, 5G, Sig Fox oder NWave; wobei die Flüssigkeitsüberwachungsvorrichtung (10) optional konfiguriert ist für eine Nutzung der elektrischen Energie zum Betreiben des Senders (84).

8. Flüssigkeitsüberwachungsvorrichtung (10) nach einem der vorangehenden Ansprüche, ferner umfassend eine Montageanordnung (14), die konfiguriert ist für die Positionierung des Energie-Harvesting-Systems in der Rohranordnung (2); wobei die Montageanordnung (14) optional derart konfiguriert ist, dass sie Flüssigkeit durch die Rohranordnung (2) strömen lässt; wobei sich die Montageanordnung (14) optional im Wesentlichen senkrecht zur Drehachse A-A der Turbine (22) erstreckt; wobei die Montageanordnung (14) optional eine Breite aufweist, wobei sich die Breite in einer durch die Drehachse (A-A) definierten Richtung erstreckt und wobei die Breite geringer ist als der Turbinendurchmesser im gespreizten Zustand; wobei der Turbinendurchmesser im gespreizten Zustand optional im Bereich von 100 mm bis 150 mm und die Breite der Montageanordnung im Bereich von 60 mm bis 100 mm liegt.

9. Flüssigkeitsüberwachungsvorrichtung (10) nach einem der vorangehenden Ansprüche, wobei die Turbine eine propellerartige Turbine umfasst.

10. Flüssigkeitsüberwachungsvorrichtung (10) nach einem der vorangehenden Ansprüche, wobei das Energie-Harvesting-System (18) ein Getriebe (24) umfasst, das mit der Turbine (22) und dem Generator (26) verbunden ist, wobei das Getriebe (24) optional derart konfiguriert ist, dass es hochschaltet, so dass eine Generator-Winkelverschiebung größer ist als eine Turbinen-Winkelverschiebung, wobei das Verhältnis der Generator-Winkelverschiebung zur Turbinen-Winkelverschiebung bevorzugt in dem Bereich von 2 zu 1 bis 10 zu 1, beispielsweise etwa 5 zu 1 beträgt; wobei das Getriebe (24) optional in die Turbine (22) eingebettet ist; wobei das Getriebe (24) optional über eine Magnetverbindung (25a, 25b) mit der Turbine (22) verbunden ist; wobei die Magnetverbindung (25a, 25b) optional eine Magnetkupplung umfasst und wobei die Magnetkupplung konfiguriert ist zum Trennen des Getriebes (24) und der Turbine (22) unter Bedingungen mit hohem Durchfluss; wobei die Turbine (22) optional eine Mehrzahl von in Umfangsrichtung angeordneten Magneten (25a) aufweist und wobei das Getriebe (24) eine entsprechende Mehrzahl von in Umfangsrichtung angeordneten Magneten (25b) aufweist.

11. Fluidüberwachungsvorrichtung (10) nach einem der vorangehenden Ansprüche, umfassend eine Einrichtung (78) zur Speicherung elektrischer Energie, die mit dem Energie-Harvesting-System (18) verbunden ist, wobei die Einrichtung (78) zur Speicherung elektrischer Energie ausgebildet ist zum Speichern elektrischer Energie, die von dem Energie-Harvesting-System (18) erzeugt wird, und wobei die Einrichtung (78) zur Speicherung elektrischer Energie zum Betreiben der Messeinrichtung und/oder der Übertragungsmittel verwendet wird.

12. Flüssigkeitsüberwachungssystem (10) nach einem der vorangehenden Ansprüche, ferner umfassend ein Gehäuse (50, 52), das eingerichtet ist zum Abdichten zumindest eines Teils des Energie-Harvesting-Systems (18) gegenüber der Flüssigkeit in der Rohranordnung (2).

13. System zum Überwachen eines Flüssigkeitsstroms durch ein Rohr (4), umfassend:
eine Flüssigkeitsüberwachungsvorrichtung (10) nach einem der vorangehenden Ansprüche, sofern abhängig von Anspruch 7;
einen Empfänger zum Empfangen von Daten, die von dem Sender (84) gesendet werden;
einen Datenprozessor zum Ermitteln von Anomalien in den empfangenen Daten; und
einen Ausgang für eine Alarmierung, wenn der Datenprozessor Anomalien erkennt.

14. Verfahren zum Überwachen eines Flüssigkeitsstroms durch eine Rohranordnung (2) mittels eines Systems nach Anspruch 13, umfassend:
Aufzeichnen von Messungen der durch das Rohr (4) strömenden Flüssigkeit mittels der Messeinrichtung;
Senden der Durchflussmessungen von dem Sender (84) an den Empfänger;
Verarbeiten der empfangenen Daten über den Datenprozessor zum Ermitteln von Anomalien; und
Alarmieren über die Datenausgabe, wenn Anomalien erkannt werden.

15. Verfahren zum Installieren einer Flüssigkeitsüberwachungsvorrichtung (10) nach einem der Ansprüche 1 bis 12 in einer Rohranordnung (2) mit einem Hauptrohr (4) und einem Nebenrohr (6), das im Wesentlichen senkrecht zu dem Hauptrohr (4) angeordnet ist, wobei das Verfahren umfasst:
Sperren eines Abschnitts der Rohranordnung (2), so dass das Nebenrohr (6) ohne Flüssigkeitsverlust entsiegelt werden kann;
Einsetzen der Flüssigkeitsüberwachungsvorrichtung (10) über das Nebenrohr (6) in das Hauptrohr (4);
Ausrichten der Turbine (22) derart, dass diese für eine Drehung eingerichtet ist, wenn eine Flüssigkeit entlang des Hauptrohres (4) strömt;
Abdichten des Nebenrohres (6); und
Entsperren des Abschnitts der Rohranordnung (2), so dass der Durchfluss in der Rohranordnung (2) nicht gehemmt wird.

## Revendications

1. Appareil de surveillance de liquide (10) pour être mis dans un dispositif de conduites (2) ayant une conduite principale (4) permettant le passage de liquide,
appareil de surveillance de liquide (10) comprenant :
- un dispositif de mesure pour mesurer des données indicatives d'une caractéristique du liquide ; et
- un système de collecte d'énergie (18) comprenant une turbine (22) configurée pour être entraînée en rotation par le flux de liquide traversant le dispositif de conduites (2) et un générateur (26) couplé à la turbine (22) pour générer de l'énergie électrique ;
* l'appareil de surveillance de liquide (10) étant configuré pour utiliser l'énergie électrique pour entraîner le dispositif de mesure,
- la turbine (22) est configurée pour être déployée dans la conduite primaire (4) du dispositif de conduites (2) et comprenant un axe de rotation (A-A) configuré pour être mis en place parallèlement à l'axe longitudinal de la conduite principale (4) du dispositif de conduites (2) ; et
la turbine (22) comprend des pales de turbine (28) qui définissent le diamètre de turbine, les pales de turbine (28) étant configurées pour transiter entre un état regroupé et un état déployé et le diamètre de la turbine est inférieur pour l'état regroupé par rapport à l'état déployé.

2. Appareil de surveillance de liquide (10) selon la revendication 1, dans lequel
le diamètre de turbine à l'état déployé est de l'ordre de 100 mm à 150 mm et le diamètre de turbine à l'état regroupé est de l'ordre de 60 mm à 100 mm.

3. Appareil de surveillance de liquide (10) selon la revendication 1 ou 2, dans lequel
la conduite principale (4) a un diamètre intérieur de conduite principale et,
le diamètre de turbine à l'état déployé est pratiquement égal au diamètre de la conduite principale.

4. Appareil de surveillance de liquide (10) selon l'une quelconque des revendications 1 à 3,
dans lequel
les pales de turbine (28) ont une matière élastique.

5. Appareil de surveillance de liquide (10) selon l'une quelconque des revendications 1 à 3,
dans lequel
la turbine (22) a un corps principal (32) et les pales de turbine (28) sont chargées élastiquement sur le corps principal (32).

6. Appareil de surveillance de liquide (10) selon l'une quelconque des revendications précédentes,
dans lequel
la propriété du liquide est l'une des suivantes : pression, turbidité ou débit à travers le dispositif de conduites (2) et, en option le dispositif de mesure comprend la turbine (22),
- le dispositif de mesure est configuré pour mesurer les données indicatives du débit dans le dispositif de conduites (2) et
- les données indicatives du débit dans le dispositif de conduites (2) comprennent la vitesse de rotation de la turbine (22) ; en option,
- le dispositif de mesure comprend un moteur (26) configuré pour entraîner la turbine (22) et le dispositif de mesure est configuré pour augmenter la puissance appliquée au moteur (26) et,
- le dispositif de mesure est configuré pour déterminer le débit de liquide par la détection de la demande de puissance réduite pour une vitesse de rotation donnée de la turbine (22).

7. Appareil de surveillance de liquide (10) selon l'une quelconque des revendications précédentes,
comprenant en outre
un transmetteur (84) pour envoyer à distance les données enregistrées par le dispositif de mesure, en option, l'émetteur / récepteur (84) comporte un transmetteur en radio fréquence, configuré pour transmettre les données par un protocole de transmission de faible puissance telles que GPRS, LoRa, NB-IoT, 5G, Sig Fox ou NWave ; en option, l'appareil de contrôle de liquide (10) est configuré pour utiliser de l'énergie électrique et alimenter le transmetteur (84).

8. Appareil de surveillance de liquide (10) selon l'une quelconque des revendications précédentes,
comprenant en outre
un agencement de montage (14) configuré pour positionner le système de collecte d'énergie dans le dispositif de conduites (2) ; en option,
- l'agencement de montage (14) est configuré pour permettre le passage de liquide à travers le dispositif de conduites (2) ; en option,
- l'agencement de montage (14) s'étend pratiquement perpendiculairement à l'axe de rotation (A-A) de la turbine (22) et en option
- l'agencement de montage (14) a une dimension qui s'étend dans la direction définie par l'axe de rotation (A-A) et
- la dimension est inférieure au diamètre de la turbine à l'état déployé ; en option,
- le diamètre de la turbine à l'état déployé est de l'ordre de 100 mm - 150 mm et la dimension de l'agencement de montage est de l'ordre de 60 mm - 100 mm.

9. Appareil de surveillance de liquide (10) selon l'une quelconque des revendications précédentes,
dans lequel
la turbine (22) est une turbine à hélice.

10. Appareil de surveillance de liquide (10) selon l'une des revendications précédentes,
dans lequel
le système de collecte d'énergie (18) comprend une boîte de vitesses (24) couplée à la turbine (22) et le générateur (26),
en option, la boîte de vitesses (24) est configurée pour accélérer de façon que la vitesse angulaire du générateur soit supérieur à la vitesse angulaire de la turbine, de préférence, le rapport de la vitesse angulaire du générateur à la vitesse angulaire de turbine est de l'ordre de 2-1 jusqu'à 10-1, en général de 5-1 ; en option,
- la boîte de vitesses (24) est logée dans la turbine (22),en option,
- la boîte de vitesses (24) est couplée à la turbine (22) par un couplage magnétique (25a, 25b), en option,
- le couplage magnétique (25a, 25b) comprend un embrayage magnétique et,
- l'embrayage magnétique est configuré pour découpler la boîte de vitesses (24) et la turbine (22) dans des conditions de fort débit ; en option,
- la turbine (22) a un ensemble d'aimants (25a) disposés en périphérie et,
- la boîte de vitesses (24) comprend un ensemble correspondant d'aimants (25b) disposés en périphérie.

11. Appareil de surveillance de liquide (10) selon l'une quelconque des revendications précédentes,
comprenant en outre
- un dispositif de stockage d'énergie électrique (78) couplé au système de collecte d'énergie (18),
- le dispositif de stockage d'énergie électrique (78) étant configuré pour stocker l'énergie générée par le système de collecte d'énergie (18) et,
- le moyen de stockage d'énergie électrique (78) est utilisé pour alimenter le dispositif de mesure et/ou le moyen de transmission.

12. Appareil de surveillance de liquide (10) selon l'une quelconque des revendications précédentes,
comprenant en outre
un boîtier (50, 52) pour sceller au moins en partie le système de collecte d'énergie (18) par rapport au liquide de l'agencement de conduite (2).

13. Système de surveillance de liquide traversant une conduite (4) comprenant :
- un appareil de surveillance de liquide (10) selon l'une quelconque des revendications précédentes lorsqu'elles sont prises avec la figure 7,
- un récepteur pour recevoir les données envoyées par le transmetteur (84),
- un processeur de données pour déterminer les anomalies des données reçues et,
- une sortie pour fournir une alerte si des anomalies sont détectées par le processeur de données.

14. Procédé de surveillance d'un liquide dans un dispositif de conduites (2) utilisant un système selon la revendication 13,
consistant à :
- enregistrer les mesures du liquide traversant la conduite (4) en utilisant l'interface de mesure,
- transmettre les mesures de débit du transmetteur (84) au récepteur ;
- traiter les données reçues par le processeur de données pour détecter les anomalies et,
- signaler par la sortie de données les anomalies détectées.

15. Procédé d'installation d'un appareil de contrôle de liquide (10) selon l'une quelconque des revendications 1 à 12 ou dispositif de conduites (2) comprenant une conduite principale (4) et une conduite secondaire (6) sensiblement perpendiculaire à la conduite principale (4),
le procédé consistant à :
- bloquer une partie du dispositif de conduites (2) pour que la conduite secondaire (6) puisse être décelée sans perte de liquide,
- insérer l'appareil de surveillance de liquide (10) dans la conduite primaire (4) par la conduite secondaire (6) ;
- orienter la turbine (22) pour qu'elle soit configurée pour tourner lorsque le liquide coule le long de la conduite primaire (4) ;
- rendre étanche la conduite secondaire (6) ; et
- débloquer la partie du dispositif de conduites (2) pour que le flux ne soit pas bloqué dans le dispositif de conduites (2).
